# EUROPÄISCHE PATENTSCHRIFT

(11) **EP 3 120 039 B1**
(45) Veröffentlichungstag und Bekanntmachung des Hinweises auf die Patenterteilung: **31.01.2018**
(21) Anmeldenummer: 15709949.0
(22) Anmeldetag: 16.03.2015
(51) Int. Cl.: F16D 65/02, B61H 7/08, F16D 63/00

(54) **GEHÄUSEVORRICHTUNG FÜR EINEN MAGNETKÖRPER FÜR EINE ELEKTROMAGNETISCHE ODER PERMANENTMAGNETISCHE SCHIENENBREMSE FÜR EIN SCHIENENFAHRZEUG UND ELEKTROMAGNETISCHE ODER PERMANENTMAGNETISCHE SCHIENENBREMSE FÜR EIN SCHIENENFAHRZEUG**
HOUSING DEVICE FOR A MAGNET BODY FOR AN ELECTROMAGNETIC OR PERMANENTLY MAGNETIC RAIL BRAKE FOR A RAIL VEHICLE AND ELECTROMAGNETIC OR PERMANENTLY MAGNETIC RAIL BRAKE FOR A RAIL VEHICLE
DISPOSITIF BOÎTIER POUR UN CORPS MAGNÉTIQUE DESTINÉ À UN FREIN SUR RAIL ÉLECTROMAGNÉTIQUE OU À AIMANT PERMANENT POUR UN VÉHICULE SUR RAILS ET FREIN SUR RAIL ÉLECTROMAGNÉTIQUE OU À AIMANT PERMANENT POUR UN VÉHICULE SUR RAILS

(30) Priorität: 17.03.2014 DE 102014103627
(43) Veröffentlichungstag der Anmeldung: 25.01.2017
(73) Patentinhaber: Knorr-Bremse Gesellschaft mit beschränkter Haftung, 2340 Mödling (AT)
(72) Erfinder: WIDLINSKI, Marcin, A-1200 Wien (AT); RATHAMMER, Richard, A-2262 Stillfried-Grub (AT); JOERGL, Volker, A-2384 Breitenfurt (AT)
(74) Vertreter: Aurigium Leischner & Luthe
(86) Internationale Anmeldenummer: PCT/EP2015/055406
(87) Internationale Veröffentlichungsnummer: WO 2015/140095

(56) Entgegenhaltungen:
- EP-A2- 1 177 962
- WO-A2-2010/038910
- DE-B3-102004 018 010
- JP-A- H03 197 271

## Beschreibung

Die vorliegende Erfindung bezieht sich auf eine Gehäusevorrichtung für einen Magnetkörper für eine elektromagnetische oder permanentmagnetische Schienenbremse für ein Schienenfahrzeug und auf eine elektromagnetische oder permanentmagnetische Schienenbremse für ein Schienenfahrzeug.

Bei einer elektromagnetischen Schienenbremse kann ein Anschlusskabel beispielsweise über einen separat adaptierten Kabelabzweigflansch in einen Magnetkörper der Schienenbremse eingeführt sein bzw. werden. In der DE 10 2004 018 010 B3 ist eine Magnetschienenbremsvorrichtung eines Schienenfahrzeugs gezeigt.

Es ist die Aufgabe der vorliegenden Erfindung, eine verbesserte Gehäusevorrichtung für einen Magnetkörper für eine Schienenbremse für ein Schienenfahrzeug und eine verbesserte Schienenbremse für ein Schienenfahrzeug zu schaffen.

Diese Aufgabe wird durch eine Gehäusevorrichtung für einen Magnetkörper für eine elektromagnetische oder permanentmagnetische Schienenbremse für ein Schienenfahrzeug und eine elektromagnetische oder permanentmagnetische Schienenbremse für ein Schienenfahrzeug gemäß den Hauptansprüchen gelöst. Vorteilhafte Ausgestaltungen ergeben sich aus den jeweiligen Unteransprüchen und der nachfolgenden Beschreibung.

Gemäß Ausführungsformen der vorliegenden Erfindung kann insbesondere ein integraler Kabelanschluss mit Einführung von Anschlusskabeln in Schräglage durch ein Gehäuse hindurch direkt in einen Magnetkörper einer elektromagnetischen oder permanentmagnetische Schienenbremse bereitgestellt werden. Hierbei kann beispielsweise eine Kabeldurchtrittsachse eines Kabels durch das Gehäuse, anstelle von parallel oder auf einer Achse zu einer weiteren Kabeldurchtrittsachse eines weiteren Kabels oder rechtwinklig bezüglich einer benachbarten Hauptoberfläche des Gehäuses liegend, in einem spitzen Winkel bezüglich einer benachbarten Hauptoberfläche des Gehäuses angeordnet sein.

Vorteilhafterweise kann insbesondere eine Einbauraum-sparende und im Radschatten des Schienenfahrzeugs geschützt realisierbare Ausführung eines Kabelausgangs in integraler Bauweise ohne zusätzliche Bauteile bereitgestellt werden. Durch eine Schräglage der Kabeldurchtritte durch das Gehäuse kann auch eine Tendenz zu stehendem Wasser im Kabelanschluss verhindert werden. Die schräge Lage der Kabeleinführung kann eine Optimierung zwischen maschineller Realisierbarkeit und Minimierung des Einbauraums ermöglichen. Es können beispielsweise Bauteile, wie dichtende Elemente und Kabel, möglichst innerhalb eines Magnetquerschnittschattens angeordnet sein. Speziell durch die mittige Anordnung der Kabeldurchführung lässt sich eine größere Flexibilität in Bezug auf die Bauraumanforderungen der Schienenbremse, insbesondere an dem Ende der Schienenbremse erreichen. Hierdurch kann beispielsweise eine Verlängerung der Schienenbremse in Richtung der Aufhängung der Schienenbremse erreicht werden, die zu einer größeren Bremswirkung der Schienenbremse führt, die durch den Verbau eines größeren Magneten in der Schienenbremse eröffnet wird.

Die vorliegende Erfindung schafft eine Gehäusevorrichtung für einen Magnetkörper für eine elektromagnetische Schienenbremse für ein Schienenfahrzeug, wobei die Gehäusevorrichtung eine erste Kabeldurchführöffnung zum Durchführen eines ersten elektrischen Anschlusskabels in den Magnetkörper aufweist, dadurch gekennzeichnet, dass eine erste Axialerstreckungsachse der ersten Kabeldurchführöffnung in einem spitzen Neigungswinkel bezüglich einer zu der ersten Kabeldurchführöffnung benachbarten Hauptoberfläche der Gehäusevorrichtung angeordnet ist, wobei die erste Kabeldurchführungsöffnung innerhalb eines Toleranzbereichs in der Mitte der Schienenbremse angeordnet ist.

Unter einem Schienenfahrzeug kann im Allgemeinen ein spurgebundenes Fahrzeug verstanden werden, wie eine Lokomotive, ein Triebzug, ein Triebwagen, eine Straßenbahn, ein U-Bahn-Fahrzeug, ein Waggon wie ein Personen- bzw. Reisezug- und/oder Güterwagen oder dergleichen. Unter einer Axialerstreckungsachse kann eine Achse verstanden werden, die beispielsweise ein Bohrer durch eine Wand nimmt, um die entsprechende Öffnung zu schaffen. Dabei kann beispielsweise die Axialerstreckungsachse eine im Wesentlichen rechtwinklige Ausrichtung auf eine Wand aufweisen, in der die Öffnung geschaffen wird. Eine Axialerstreckungsachse der ersten Kabeldurchführöffnung kann die erste Axialerstreckungsachse sein. Eine Kabeldurchführöffnung kann als Durchgangsöffnung in der Gehäusevorrichtung ausgeformt sein. Hierbei kann ein lichter Durchmesser einer Kabeldurchführöffnung größer oder gleich ein Außendurchmesser eines Anschlusskabels sein. Dabei kann die erste Kabeldurchführungsöffnung innerhalb eines Toleranzbereichs in der Mitte der Schienenbremse angeordnet sein, wobei der Toleranzbereich einen Bereich von beispielsweise der Hälfte oder einem Viertel der Längserstreckung der Schienenbremse um die Mitte der Schienenbremse entspricht.

Gemäß einer Ausführungsform, wobei die Gehäusevorrichtung eine zweite Kabeldurchführöffnung zum Durchführen eines zweiten elektrischen Anschlusskabels in den Magnetkörper aufweist, kann die zweite Axialerstreckungsachse in dem spitzen Neigungswinkel bezüglich der Hauptoberfläche, die zu der ersten Kabeldurchführöffnung und/oder der zweiten Kabeldurchführöffnung benachbart ist, angeordnet sein. Eine Axialerstreckungsachse der zweiten Kabeldurchführöffnung kann die zweite Axialerstreckungsachse sein. Dabei können die erste Axialerstreckungsachse und/oder die zweite Axialerstreckungsachse in einem spitzen Neigungswinkel bezüglich einer Haupterstreckungsebene der Hauptoberfläche angeordnet sein. Eine solche Ausführungsform bietet den Vorteil, dass eine schräge Kabeldurchführung in das Gehäuse bzw. den Magnetkörper erreicht wird, was die Einsparung von Bauraum ermöglicht, insbesondere da ein Überschreiten eines zulässigen Biegeradius der Kabel bezüglich der Hauptoberfläche vermieden werden kann.

Auch können die erste Axialerstreckungsachse und die zweite Axialerstreckungsachse einen stumpfen Winkel zwischen einander aufspannen. Eine solche Ausführungsform bietet den Vorteil, dass eine besonders Einbauraum-sparende Gehäusevorrichtung bereitgestellt werden kann.

Ferner kann die erste Kabeldurchführöffnung in einem ersten Vertiefungsabschnitt der Gehäusevorrichtung angeordnet sein und/oder kann die zweite Kabeldurchführöffnung in einem zweiten Vertiefungsabschnitt der Gehäusevorrichtung angeordnet sein. Hierbei können insbesondere der erste Vertiefungsabschnitt und der zweite Vertiefungsabschnitt in einer gemeinsamen Hauptoberfläche der Gehäusevorrichtung ausgeformt sein. Bei der gemeinsamen Hauptoberfläche kann es sich um eine Oberfläche auf einer Montageseite der Gehäusevorrichtung handeln. Eine solche Ausführungsform bietet den Vorteil, dass hinsichtlich der elektrischen Kontaktierung des Magnetkörpers Bauraum eingespart werden kann, indem die Kabeldurchführöffnungen bezüglich der gemeinsamen Hauptoberfläche versenkt angeordnet sind.

Dabei kann der erste Vertiefungsabschnitt eine bezüglich einer Haupterstreckungsebene der gemeinsamen Hauptoberfläche spitzwinklig geneigte Wand aufweisen, in der die erste Kabeldurchführöffnung ausgeformt ist. Alternativ oder zusätzlich kann der zweite Vertiefungsabschnitt eine bezüglich der Haupterstreckungsebene der gemeinsamen Hauptoberfläche spitzwinklig geneigte Wand aufweisen, in der die zweite Kabeldurchführöffnung ausgeformt ist. Hierbei können der erste Vertiefungsabschnitt und der zweite Vertiefungsabschnitt als kerbenförmige bzw. eingekerbte Vertiefungen der gemeinsamen Hauptoberfläche ausgeformt sein. In Abhängigkeit von Neigungswinkeln der geneigten Wände der Vertiefungsabschnitte können Winkel der Axialerstreckungsachsen der Kabeldurchführöffnungen bezüglich der Haupterstreckungsebene der gemeinsamen Hauptoberfläche resultieren. Eine solche Ausführungsform bietet den Vorteil, dass Vertiefungsabschnitte in Gestalt von Kerben unaufwendig ausformbar sind. Auch kann eine Beziehung zwischen den Neigungswinkeln und den Winkeln der Axialerstreckungsachsen vorteilhaft ausgenutzt werden.

Insbesondere kann der erste Vertiefungsabschnitt und/oder der zweite Vertiefungsabschnitt entlang einer Seitenkante der gemeinsamen Hauptoberfläche angeordnet sein. Dabei können der erste Vertiefungsabschnitt und der zweite Vertiefungsabschnitt in einem Randabschnitt der gemeinsamen Hauptoberfläche angeordnet sein. Hierbei kann der erste Vertiefungsabschnitt eine offene Seite aufweisen und kann der zweite Vertiefungsabschnitt eine offene Seite aufweisen. Alternativ kann der erste Vertiefungsabschnitt und/oder der zweite Vertiefungsabschnitt quer bezüglich der Seitenkante der gemeinsamen Hauptoberfläche angeordnet sein. Eine solche Ausführungsform bietet den Vorteil, dass die Vertiefungsabschnitte zu Montagezwecken und Reinigungszwecken zugänglich und widerstandsfähiger gegen Verschmutzung sind, wobei beispielsweise Spritzwasser aus den Vertiefungsabschnitten abfließen kann.

Zudem können eine benachbart zu der ersten Kabeldurchführöffnung angeordnete, erste Befestigungseinrichtung zum Befestigen des ersten Anschlusskabels und/oder eine benachbart zu der zweiten Kabeldurchführöffnung angeordnete, zweite Befestigungseinrichtung zum Befestigen des zweiten Anschlusskabels vorgesehen sein. Hierbei kann die erste Befestigungseinrichtung die erste Kabeldurchführöffnung umgebend angeordnet sein und/oder kann die zweite Befestigungseinrichtung die zweite Kabeldurchführöffnung umgebend angeordnet sein. Eine solche Ausführungsform bietet den Vorteil, dass eine einfache und platzsparende Befestigung der Anschlusskabel an der Gehäusevorrichtung realisierbar ist.

Günstig ist ferner eine Ausführungsform des hier vorgestellten Ansatzes, bei dem der Toleranzbereich der Hälfte der Länge der Schienenbremse entspricht, insbesondere wobei der Toleranzbereich einem Viertel der Länge der Schienenbremse entspricht. Eine solche Ausführungsform des hier vorgestellten Ansatzes bietet den Vorteil, einer besonders günstigen Bauraumersparnis, da ein Verlauf des durch die Kabeldurchführungsöffnung verlaufenden Kabels im Bereich der Aufhängung der Schienenbremse weitgehend vermieden werden kann. Dies dient einerseits dem Schutz des Kabels vor Schmutz oder Beschädigungen und andererseits der Möglichkeit einer Verlängerung des Magneten der Schienenbremse, was infolge zu einer erhöhten Bremswirkung der Schienenbremse führt.

Die vorliegende Erfindung schafft eine elektromagnetische oder permanentmagnetische Schienenbremse für ein Schienenfahrzeug, dadurch gekennzeichnet, dass die Schienenbremse zumindest einmal eine Ausführungsform der vorstehend genannten Gehäusevorrichtung für einen Magnetkörper aufweist.

In Verbindung mit der elektromagnetischen oder permanentmagnetische Schienenbremse kann eine Ausführungsform der vorstehend genannten Gehäusevorrichtung vorteilhaft eingesetzt bzw. verwendet werden, um bei vereinfachtem und verkleinertem Aufbau eine Schutzwirkung für einen Magnetkörper zu optimieren. Bei der elektromagnetischen oder permanentmagnetische Schienenbremse kann es sich um eine sogenannte Wirbelstrombremse handeln. Der Magnetkörper kann Teil eines Starrmagneten oder dergleichen sein. Die Gehäusevorrichtung, und somit die elektromagnetische oder permanentmagnetische Schienenbremse, kann mittels einer Aufhängevorrichtung bewegbar an dem Schienenfahrzeug anbringbar sein. Die elektromagnetische oder permanentmagnetische Schienenbremse kann mehrere Magnetkörper mit jeweils einer Ausführungsform der vorstehend genannten Gehäusevorrichtung aufweisen.

Bevorzugte Ausführungsbeispiele der vorliegenden Erfindung werden nachfolgend Bezug nehmend auf die beiliegenden Zeichnungen näher erläutert. Es zeigen:
- Figuren 1 bis 3: Darstellungen von Gehäusevorrichtungen für einen Magnetkörper für eine elektromagnetische oder permanentmagnetische Schienenbremse; und
- Fig. 4: eine Darstellung einer Gehäusevorrichtung für einen Magnetkörper für eine elektromagnetische oder permanentmagnetische Schienenbremse gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

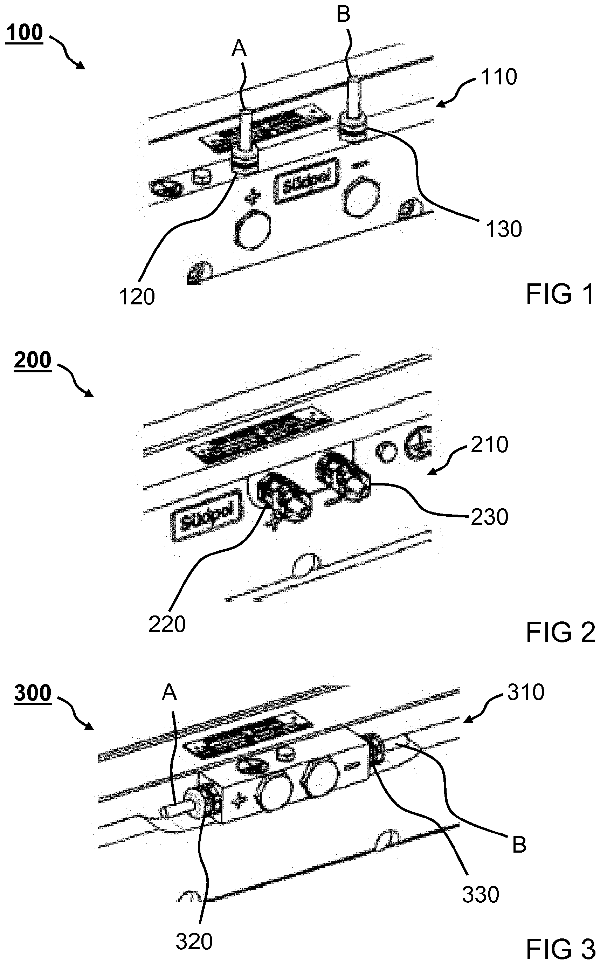

Fig. 1 zeigt eine Darstellung einer Gehäusevorrichtung 100 für einen Magnetkörper für eine elektromagnetische Schienenbremse. Hierbei sind in Fig. 1 von der Gehäusevorrichtung 100 eine Hauptoberfläche 110, eine erste Befestigungseinrichtung 120 und eine zweite Befestigungseinrichtung 130 sowie ferner auch ein erstes elektrisches Anschlusskabel A und ein zweites elektrisches Anschlusskabel B gezeigt. Die Hauptoberfläche 110 ist gemäß der in Fig. 1 dargestellten Ausführung einer Gehäusevorrichtung 100 eine schienenfahrzeugseitige Oberfläche bzw. Montageoberfläche, die in einem montierten Zustand der Gehäusevorrichtung 100 bzw. der elektromagnetischen Schienenbremse an einem Schienenfahrzeug dem Schienenfahrzeug zugewandt ist.

In der Hauptoberfläche 110 der Gehäusevorrichtung 100 sind in Fig. 1 darstellungsbedingt verdeckte Gehäuseöffnungen zum Hindurchführen der Anschlusskabel A und B ausgeformt. Das erste Anschlusskabel A und das zweite Anschlusskabel B sind durch die Gehäuseöffnungen in der Hauptoberfläche 110 hindurch in das Innere der Gehäusevorrichtung 100 hineingeführt. Die erste Befestigungseinrichtung 120 ist eine erste Gehäuseöffnung umgebend an der Hauptoberfläche 110 angeordnet. Die zweite Befestigungseinrichtung 130 ist eine zweite Gehäuseöffnung umgebend an der Hauptoberfläche 110 angeordnet.

Dabei ist das erste Anschlusskabel A durch die erste Gehäuseöffnung geführt und mittels der ersten Befestigungseinrichtung 120 an der Gehäusevorrichtung 100 befestigt.

Das zweite Anschlusskabel B ist durch die zweite Gehäuseöffnung geführt und mittels der zweiten Befestigungseinrichtung 130 an der Gehäusevorrichtung 100 befestigt. Das erste Anschlusskabel A und das zweite Anschlusskabel B sind parallel bezüglich einander und jeweils in einem rechten Winkel bzw. orthogonal bezüglich der Hauptoberfläche 110 der Gehäusevorrichtung 100 durch die Gehäuseöffnungen hindurchgeführt. Eine solche direkte bzw. integrale Ausführung von Kabeleinführungen kann eine nachteilige Eingrenzung eines Einbauraums bedingen.

Fig. 2 zeigt eine Darstellung einer Gehäusevorrichtung 200 für einen Magnetkörper für eine elektromagnetische Schienenbremse. Hierbei sind von der Gehäusevorrichtung 200 in Fig. 2 eine Hauptoberfläche 210, eine erste Befestigungseinrichtung 220 und eine zweite Befestigungseinrichtung 230 gezeigt. Die Hauptoberfläche 210 ist gemäß der in Fig. 2 dargestellten Ausführung einer Gehäusevorrichtung 200 eine laterale Oberfläche, die in einem montierten Zustand der Gehäusevorrichtung 200 bzw. der elektromagnetischen Schienenbremse an einem Schienenfahrzeug an eine Montageoberfläche bzw. dem Schienenfahrzeug zugewandte Oberfläche angrenzt.

In der Hauptoberfläche 210 der Gehäusevorrichtung 200 sind in Fig. 2 darstellungsbedingt verdeckte Gehäuseöffnungen zum Hindurchführen von elektrischen Anschlusskabeln ausgeformt. Ein erstes Anschlusskabel und ein zweites Anschlusskabel sind durch die Gehäuseöffnungen in der Hauptoberfläche 210 hindurch in das Innere der Gehäusevorrichtung 200 hineinführbar. Die erste Befestigungseinrichtung 220 ist eine erste Gehäuseöffnung umgebend an der Hauptoberfläche 210 angeordnet. Die zweite Befestigungseinrichtung 230 ist eine zweite Gehäuseöffnung umgebend an der Hauptoberfläche 210 angeordnet.

Dabei ist das erste Anschlusskabel durch die erste Gehäuseöffnung führbar und mittels der ersten Befestigungseinrichtung 220 an der Gehäusevorrichtung 200 befestigbar. Das zweite Anschlusskabel ist durch die zweite Gehäuseöffnung führbar und mittels der zweiten Befestigungseinrichtung 230 an der Gehäusevorrichtung 200 befestigbar. Die Gehäusevorrichtung 200 ist hierbei so ausgebildet, dass das erste Anschlusskabel und das zweite Anschlusskabel parallel bezüglich einander und jeweils in einem rechten Winkel bzw. orthogonal bezüglich der Hauptoberfläche 210 der Gehäusevorrichtung 200 durch die Gehäuseöffnungen hindurchführbar sind. Eine solche direkte bzw. integrale Ausführung von Kabeleinführungen kann eine nachteilige Eingrenzung eines Einbauraums bedingen und außerhalb eines Schutzes eines Radschattens des Schienenfahrzeugs angeordnet sein.

Fig. 3 zeigt eine Darstellung einer Gehäusevorrichtung 300 für einen Magnetkörper für eine elektromagnetische Schienenbremse. Hierbei sind in Fig. 3 von der Gehäusevorrichtung 300 eine Hauptoberfläche 310, eine erste Befestigungseinrichtung 320 und eine zweite Befestigungseinrichtung 330 sowie ferner auch ein erstes elektrisches Anschlusskabel A und ein zweites elektrisches Anschlusskabel B gezeigt. Die Hauptoberfläche 310 ist gemäß der in Fig. 3 dargestellten Ausführung einer Gehäusevorrichtung 300 eine schienenfahrzeugseitige Oberfläche bzw. Montageoberfläche, die in einem montierten Zustand der Gehäusevorrichtung 300 bzw. der elektromagnetischen Schienenbremse an einem Schienenfahrzeug dem Schienenfahrzeug zugewandt ist.

In der Hauptoberfläche 310 der Gehäusevorrichtung 300 sind in Fig. 3 darstellungsbedingt verdeckte Gehäuseöffnungen zum Hindurchführen der Anschlusskabel A und B ausgeformt. Das erste Anschlusskabel A und das zweite Anschlusskabel B sind durch die Gehäuseöffnungen in der Hauptoberfläche 310 hindurch in das Innere der Gehäusevorrichtung 300 hineingeführt. Die erste Befestigungseinrichtung 320 ist eine erste Gehäuseöffnung umgebend an der Hauptoberfläche 310 angeordnet. Die zweite Befestigungseinrichtung 330 ist eine zweite Gehäuseöffnung umgebend an der Hauptoberfläche 310 angeordnet. Dabei sind die Gehäuseöffnungen und die Befestigungseinrichtungen 320 und 330 an einem Kabelabzweigflansch angeordnet. Eine Einführung der Anschlusskabel A und B in dem Magnetkörper erfolgt hierbei somit über einen separat adaptierten Kabelabzweigflansch.

Dabei ist das erste Anschlusskabel A durch die erste Gehäuseöffnung geführt und mittels der ersten Befestigungseinrichtung 320 an der Gehäusevorrichtung 300 befestigt. Das zweite Anschlusskabel B ist durch die zweite Gehäuseöffnung geführt und mittels der zweiten Befestigungseinrichtung 330 an der Gehäusevorrichtung 300 befestigt. Das erste Anschlusskabel A und das zweite Anschlusskabel B sind axial beziehungsweise koaxial bezüglich einander und jeweils parallel bezüglich der Hauptoberfläche 110 der Gehäusevorrichtung 100 durch die Gehäuseöffnungen hindurchgeführt.

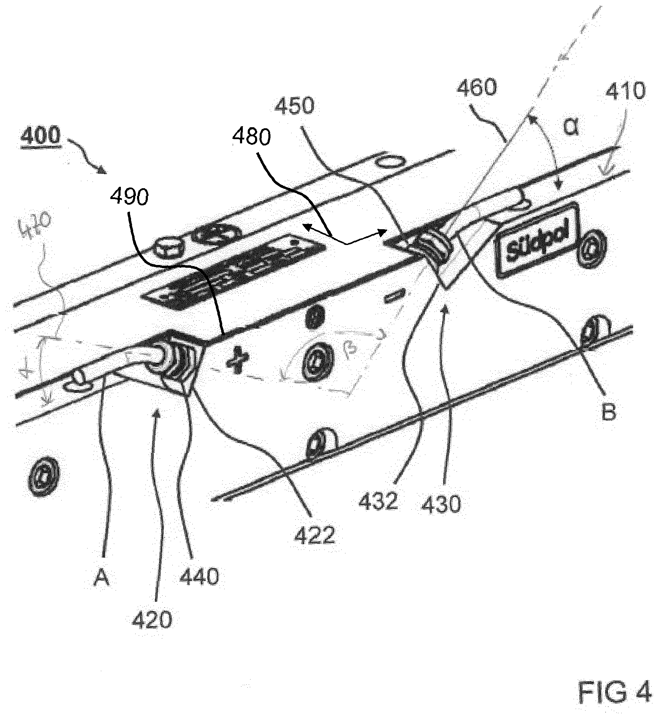

Fig. 4 zeigt eine Darstellung einer Gehäusevorrichtung 400 für einen Magnetkörper für eine elektromagnetische Schienenbremse für ein Schienenfahrzeug gemäß einem Ausführungsbeispiel der vorliegenden Erfindung. Gezeigt sind in Fig. 4 von der Gehäusevorrichtung 400 eine Hauptoberfläche 410, ein erster Vertiefungsabschnitt 420, eine geneigte Wand 422 des ersten Vertiefungsabschnitts 420, ein zweiter Vertiefungsabschnitt 430, eine geneigte Wand 432 des zweiten Vertiefungsabschnitts 430, eine erste Befestigungseinrichtung 440, eine zweite Befestigungseinrichtung 450, eine zweite Axialerstreckungsachse 460, eine erste Axialerstreckungsachse 470, eine durch zwei Vektorpfeile symbolisierte Haupterstreckungsebene 480, eine Seitenkante 490, ein spitzer Neigungswinkel a, und ein zwischen den Axialerstreckungsachsen 460 und 470 aufgespannter, stumpfer Winkel β sowie ferner auch ein erstes elektrisches Anschlusskabel A und ein zweites elektrisches Anschlusskabel B.

Die Gehäusevorrichtung 400 ist ausgebildet, um den Magnetkörper einzuhäusen. Die elektromagnetische Schienenbremse weist dabei zumindest einen Magnetkörper auf, der von der Gehäusevorrichtung 400 oder von jeweils einer Gehäusevorrichtung wie der Gehäusevorrichtung 400 umgeben ist. Die elektromagnetische Schienenbremse ist an dem Schienenfahrzeug anbringbar. Das Schienenfahrzeug weist zum Beispiel ein spurgebundenes Fahrzeug, wie eine Lokomotive, einen Triebzug, eine Straßenbahn, einen Waggon oder dergleichen auf.

Die Hauptoberfläche 410 ist gemäß dem in Fig. 4 dargestellten Ausführungsbeispiel der vorliegenden Erfindung eine schienenfahrzeugseitige Oberfläche bzw. Montageoberfläche, die in einem an dem Schienenfahrzeug montierten Zustand der Gehäusevorrichtung 400 bzw. der elektromagnetischen Schienenbremse dem Schienenfahrzeug zugewandt ist. In der Hauptoberfläche 410 sind der erste Vertiefungsabschnitt 420 und der zweite Vertiefungsabschnitt 430 ausgeformt.

Der erste Vertiefungsabschnitt 420 und der zweite Vertiefungsabschnitt 430 sind als kerbenförmige bzw. eingekerbte Vertiefungen der Hauptoberfläche 410 ausgeformt. Dabei sind der erste Vertiefungsabschnitt 420 und der zweite Vertiefungsabschnitt 430 entlang einer Seitenkante 490 der Hauptoberfläche 410 angeordnet. Somit sind der erste Vertiefungsabschnitt 420 und der zweite Vertiefungsabschnitt 430 in einem Randabschnitt der Hauptoberfläche 410 angeordnet. Hierbei weisen die Vertiefungsabschnitte 420 und 430 zu einer Seitenoberfläche der Gehäusevorrichtung 400 hin jeweils eine offene Seite auf, wobei die Seitenoberfläche an der Seitenkante 490 der Hauptoberfläche 410 an die Hauptoberfläche 410 angrenzt.

Der erste Vertiefungsabschnitt 420 weist die geneigte Wand 422 auf, die bezüglich einer Haupterstreckungsebene 480 der Hauptoberfläche 410 spitzwinklig geneigt ist. Der zweite Vertiefungsabschnitt 430 weist die geneigte Wand 432 auf, die bezüglich der Haupterstreckungsebene 480 der Hauptoberfläche 410 spitzwinklig geneigt ist. Gemäß dem in Fig. 4 dargestellten Ausführungsbeispiel der vorliegenden Erfindung sind die geneigten Wände 422 und 432 einander zugewandt angeordnet. Auch weisen die Vertiefungsabschnitte 420 und 430 jeweils eine weitere bezüglich der Haupterstreckungsebene 480 der Hauptoberfläche 410 spitzwinklig geneigte Wand auf, die voneinander abgewandt angeordnet sind.

In den Vertiefungsabschnitten 420 und 430 sind in Fig. 4 darstellungsbedingt verdeckte Kabeldurchführöffnungen zum Hindurchführen der Anschlusskabel A und B in das Innere der Gehäusevorrichtung 400 ausgeformt. Dabei weist die Gehäusevorrichtung 400 eine erste Kabeldurchführöffnung zum Durchführen des ersten elektrischen Anschlusskabels A in den Magnetkörper und eine zweite Kabeldurchführöffnung zum Durchführen des zweiten elektrischen Anschlusskabels B in den Magnetkörper auf.

Genau gesagt sind die Kabeldurchführöffnungen in den geneigten Wänden 422 und 432 der Vertiefungsabschnitte 420 und 430 ausgeformt. Hierbei ist die erste Kabeldurchführöffnung in dem ersten Vertiefungsabschnitt 420 der Gehäusevorrichtung 400 angeordnet. Die erste Kabeldurchführöffnung ist in der geneigten Wand 422 des ersten Vertiefungsabschnitts 420 der Gehäusevorrichtung 400 ausgeformt. Die zweite Kabeldurchführöffnung ist in dem zweiten Vertiefungsabschnitt 430 der Gehäusevorrichtung 400 angeordnet. Die zweite Kabeldurchführöffnung ist in der geneigten Wand 432 des zweiten Vertiefungsabschnitts 430 der Gehäusevorrichtung 400 ausgeformt.

Die Kabeldurchführöffnungen sind als Durchgangsöffnungen der Gehäusevorrichtung 400 ausgeformt. Hierbei ist ein lichter Durchmesser einer Kabeldurchführöffnung größer oder gleich einem Außendurchmesser eines Anschlusskabels A bzw. B. Das erste Anschlusskabel A und das zweite Anschlusskabel B sind durch die Kabeldurchführöffnungen hindurch in das Innere der Gehäusevorrichtung 400 hineingeführt.

Die erste Kabeldurchführung ist dabei innerhalb eines Toleranzbereichs in der Mitte der Schienenbremse angeordnet. Unter einem Toleranzbereich in der Mitte der Schienenbremse ist hierbei ein Bereich zu verstehen, der sich beispielsweise beidseitig um die Mitte der Schienenbremse in einem Bereich herum erstreckt, der einem Viertel der Gesamtlänge der Schienenbremse entspricht. Auf diese Weise bietet der hier vorgestellte Ansatz den Vorteil, dass die Kabel nicht an der Stirnseite vom Magnetkörper bzw. der Schienenbremse weggeführt werden brauchen. Je enger die Kabeldurchführung an der Mitte der Schienenbremse angeordnet ist, desto mehr Flexibilität kann im Bereich der Außenränder der Schienenbremse erreicht werden, da an diesen Stellen keine Rücksicht mehr auf ein ansonsten zu führendes Kabel genommen werden braucht. Bei dem hier vorgestellten Ansatz verlassen die Kabel dagegen auf der Oberseite den Magneten, der beispielsweise die Schienenbremse bildet. Dies hat den Vorteil, dass man nicht zusätzlichen Raum zwischen Rad und Magnet schaffen braucht, um das Kabel wegzuführen, wie es bei dem bestehenden Magnet der Fall ist und die abzudichtende Stelle (Kabelverschraubung) durch das Rad nicht verschmutzt wird.

Die erste Befestigungseinrichtung 440 ist zum Befestigen des ersten Anschlusskabels A an der Gehäusevorrichtung 400 ausgebildet. Dabei ist die erste Befestigungseinrichtung 440 die erste Kabeldurchführöffnung umgebend an der geneigten Wand 422 des ersten Vertiefungsabschnitts 420 angeordnet. Das erste Anschlusskabel A mittels der ersten Befestigungseinrichtung 440 an der Gehäusevorrichtung 400 befestigt. Die zweite Befestigungseinrichtung 450 ist zum Befestigen des zweiten Anschlusskabels B an der Gehäusevorrichtung 400 ausgebildet. Dabei ist die zweite Befestigungseinrichtung 450 die zweite Kabeldurchführöffnung umgebend an der geneigten Wand 432 des zweiten Vertiefungsabschnitts 430 angeordnet. Das zweite Anschlusskabel B mittels der zweiten Befestigungseinrichtung 450 an der Gehäusevorrichtung 400 befestigt.

Die erste Kabeldurchführöffnung weist die erste Axialerstreckungsachse 470 auf und die zweite Kabeldurchführöffnung weist die zweite Axialerstreckungsachse 460 auf. Kabeldurchführachsen der Anschlusskabel A und B durch die Kabeldurchführöffnungen der Gehäusevorrichtung 400 hindurch entsprechen hierbei den Axialerstreckungsachsen 460 und 470 der Kabeldurchführöffnungen.

Dabei sind die erste Axialerstreckungsachse 470 und die zweite Axialerstreckungsachse 460 in einem spitzen Neigungswinkel α bezüglich der Haupterstreckungsebene 480 der Hauptoberfläche 410 angeordnet. In Fig. 4 ist ersichtlich, dass gemäß dem in Fig. 4 dargestellten Ausführungsbeispiel der vorliegenden Erfindung beide Axialerstreckungsachsen 460 und 470 jeweils in dem gleichen Neigungswinkel α bezüglich der Haupterstreckungsebene 480 der Hauptoberfläche 410 angeordnet sind.

Somit spannen die erste Axialerstreckungsachse 470 der ersten Kabeldurchführöffnung und die zweite Axialerstreckungsachse 460 der zweiten Kabeldurchführöffnung einen stumpfen Winkel β zwischen einander auf. Dabei beträgt der stumpfe Winkel β 180 Grad minus dem zweifachen des spitzen Neigungswinkels a.

In Abhängigkeit von Neigungswerten der geneigten Wände 422 und 432 der Vertiefungsabschnitte 420 und 430 ergeben sich die spitzen Neigungswinkel α der Axialerstreckungsachsen 460 und 470 der Kabeldurchführöffnungen bezüglich der Haupterstreckungsebene 480 der Hauptoberfläche 410 und somit auch der zwischen den Axialerstreckungsachsen 460 und 470 aufgespannte stumpfe Winkel β. Die Neigungswerte bzw. Winkel der geneigten Wände 422 und 432 der Vertiefungsabschnitte 420 und 430 bezüglich der Haupterstreckungsebene 480 der Hauptoberfläche 410 repräsentieren hierbei Gegenwinkel zu den spitzen Neigungswinkeln a.

Das erste Anschlusskabel A erstreckt sich im Bereich der ersten Kabeldurchführöffnung entlang der ersten Axialerstreckungsachse 470, weist in einem Übergangsbereich zwischen dem ersten Vertiefungsabschnitt 420 und der Hauptoberfläche 410 einen gebogenen Abschnitt auf und erstreckt sich in einem weiteren Verlauf entlang der Haupterstreckungsebene 480 der Hauptoberfläche 410. Das zweite Anschlusskabel B erstreckt sich im Bereich der zweiten Kabeldurchführöffnung entlang der zweiten Axialerstreckungsachse 460, weist in einem Übergangsbereich zwischen dem zweiten Vertiefungsabschnitt 430 und der Hauptoberfläche 410 einen gebogenen Abschnitt auf und erstreckt sich in einem weiteren Verlauf entlang der Haupterstreckungsebene 480 der Hauptoberfläche 410.

Anders ausgedrückt ist in Fig. 4 eine Einführung der Anschlusskabel A und B in Schräglage direkt in den Magnetkörper dargestellt. Die schräge Lage der Kabeleinführung ist eine Optimierung zwischen noch maschineller Realisierbarkeit und Minimierung des Einbauraums verursacht durch eine Kabelverschraubung an den Befestigungseinrichtungen 440 und 450 oder anderen ähnlichen dichtenden Elementen und der Anschlusskabel A und B selbst sowie deren Mindestbiegeradien. Bei der Optimierung wird angestrebt, den Neigungswinkel α möglichst gering zu halten, um die Bauteile der Kabelanschlüsse, wie beispielsweise dichtende Elemente und die Anschlusskabel selbst, möglichst innerhalb des Magnetquerschnittschattens der elektromagnetischen Schienenbremse zu halten. Insbesondere ist dabei die Minimierung des Neigungswinkels α lediglich aufgrund einer notwendigen Bohrung für die Kabeldurchführöffnungen durch werkzeugtechnische und maschinelle Gegebenheiten begrenzt.

Die beschriebenen Ausführungsbeispiele sind nur beispielhaft gewählt und können miteinander kombiniert werden.

### Bezugszeichenliste

- 100: Gehäusevorrichtung
- 110: Hauptoberfläche
- 120: erste Befestigungseinrichtung
- 130: zweite Befestigungseinrichtung
- A: erstes elektrisches Anschlusskabel
- B: zweites elektrisches Anschlusskabel
- 200: Gehäusevorrichtung
- 210: Hauptoberfläche
- 220: erste Befestigungseinrichtung
- 230: zweite Befestigungseinrichtung
- 300: Gehäusevorrichtung
- 310: Hauptoberfläche
- 320: erste Befestigungseinrichtung
- 330: zweite Befestigungseinrichtung
- 400: Gehäusevorrichtung
- 410: Hauptoberfläche
- 420: erster Vertiefungsabschnitt
- 422: geneigte Wand
- 430: zweiter Vertiefungsabschnitt
- 432: geneigte Wand
- 440: erste Befestigungseinrichtung
- 450: zweite Befestigungseinrichtung
- 460: zweite Axialerstreckungsachse
- 470: erste Axialerstreckungsachse
- 480: Haupterstreckungsebene
- 490: Seitenkante
- α: spitzer Neigungswinkel
- β: stumpfer Winkel (zwischen den Axialerstreckungsachsen aufgespannt)

## Patentansprüche

1. Gehäusevorrichtung (400) für einen Magnetkörper für eine elektromagnetische oder permanentmagnetische Schienenbremse für ein Schienenfahrzeug, wobei die Gehäusevorrichtung (400) eine erste Kabeldurchführöffnung zum Durchführen eines ersten elektrischen Anschlusskabels (A) in den Magnetkörper aufweist, **dadurch gekennzeichnet, dass** eine erste Axialerstreckungsachse (470) der ersten Kabeldurchführöffnung in einem spitzen Neigungswinkel (α) bezüglich einer zu der ersten Kabeldurchführöffnung benachbarten Hauptoberfläche (410) der Gehäusevorrichtung (400) angeordnet ist, wobei die erste Kabeldurchführungsöffnung innerhalb eines Toleranzbereichs in der Mitte der Schienenbremse angeordnet ist.

2. Gehäusevorrichtung (400) gemäß Anspruch 1, wobei die Gehäusevorrichtung (400) eine zweite Kabeldurchführöffnung zum Durchführen eines zweiten elektrischen Anschlusskabels (B) in den Magnetkörper aufweist, **dadurch gekennzeichnet, dass** die zweite Axialerstreckungsachse (460) in dem spitzen Neigungswinkel (α) bezüglich der Hauptoberfläche (410), die zu der ersten Kabeldurchführöffnung und/oder der zweiten Kabeldurchführöffnung benachbart ist, angeordnet ist.

3. Gehäusevorrichtung (400) gemäß Anspruch 2, **dadurch gekennzeichnet, dass** die erste Axialerstreckungsachse (470) und die zweite Axialerstreckungsachse (460) einen stumpfen Winkel (β) zwischen einander aufspannen.

4. Gehäusevorrichtung (400) gemäß einem der vorangegangenen Ansprüche, **dadurch gekennzeichnet, dass** die erste Kabeldurchführöffnung in einem ersten Vertiefungsabschnitt (420) der Gehäusevorrichtung (400) angeordnet ist und/oder die zweite Kabeldurchführöffnung in einem zweiten Vertiefungsabschnitt (430) der Gehäusevorrichtung (400) angeordnet ist, insbesondere wobei der erste Vertiefungsabschnitt (420) und der zweite Vertiefungsabschnitt (430) in einer gemeinsamen Hauptoberfläche (410) der Gehäusevorrichtung (400) ausgeformt sind.

5. Gehäusevorrichtung (400) gemäß Anspruch 4, **dadurch gekennzeichnet, dass** der erste Vertiefungsabschnitt (420) eine bezüglich einer Haupterstreckungsebene (480) der gemeinsamen Hauptoberfläche (410) spitzwinklig geneigte Wand (422) aufweist, in der die erste Kabeldurchführöffnung ausgeformt ist und/oder der zweite Vertiefungsabschnitt (430) eine bezüglich der Haupterstreckungsebene (480) der gemeinsamen Hauptoberfläche (410) spitzwinklig geneigte Wand (432) aufweist, in der die zweite Kabeldurchführöffnung ausgeformt ist.

6. Gehäusevorrichtung (400) gemäß einem der Ansprüche 4 bis 5, **dadurch gekennzeichnet, dass** der erste Vertiefungsabschnitt (420) und/oder der zweite Vertiefungsabschnitt (430) entlang einer Seitenkante (490) der gemeinsamen Hauptoberfläche (410) angeordnet ist.

7. Gehäusevorrichtung (400) gemäß einem der vorangegangenen Ansprüche, **gekennzeichnet durch** eine benachbart zu der ersten Kabeldurchführöffnung angeordnete, erste Befestigungseinrichtung (440) zum Befestigen des ersten Anschlusskabels (A) und/oder eine benachbart zu der zweiten Kabeldurchführöffnung angeordnete, zweite Befestigungseinrichtung (450) zum Befestigen des zweiten Anschlusskabels (B).

8. Gehäusevorrichtung (400) gemäß einem der vorangegangenen Ansprüche, **dadurch gekennzeichnet, dass** der Toleranzbereich der Hälfte der Länge der Schienenbremse entspricht, insbesondere wobei der Toleranzbereich einem Viertel der Länge der Schienenbremse entspricht.

9. Elektromagnetische oder permanentmagnetische Schienenbremse für ein Schienenfahrzeug, **dadurch gekennzeichnet, dass** die Schienenbremse zumindest eine Gehäusevorrichtung (400) für einen Magnetkörper gemäß einem der vorangegangenen Ansprüche aufweist.

## Claims

1. A housing device (400) for a magnet body for an electromagnetic or permanently magnetic rail brake for a rail vehicle, the housing device (400) having a first cable through opening for leading through a first electrical connector cable (A) into the magnet body, **characterized in that** a first axial extent axis (470) of the first cable through opening is arranged at an acute inclination angle (α) with regard to a main surface (410) of the housing device (400) which is adjacent with respect to the first cable through opening, the first cable through opening being arranged in the center of the rail brake within a tolerance range.

2. The housing device (400) as claimed in claim 1, the housing device (400) having a second cable through opening for leading through a second electrical connector cable (B) into the magnet body, **characterized in that** the second axial extent axis (460) is arranged at the acute inclination angle (α) with regard to the main surface (410) which is adjacent with respect to the first cable through opening and/or the second cable through opening.

3. The housing device (400) as claimed in claim 2, **characterized in that** the first axial extent axis (470) and the second axial extent axis (460) define an obtuse angle (β) between one another.

4. The housing device (400) as claimed in one of the preceding claims, **characterized in that** the first cable through opening is arranged in a first depression section (420) of the housing device (400) and/or the second cable through opening is arranged in a second depression section (430) of the housing device (400), the first depression section (420) and the second depression section (430) being formed, in particular, in a common main surface (410) of the housing device (400) .

5. The housing device (400) as claimed in claim 4, **characterized in that** the first depression section (420) has a wall (422) which is inclined at an acute angle with regard to a main extent plane (480) of the common main surface (410) and in which the first cable through opening is formed, and/or the second depression section (430) has a wall (432) which is inclined at an acute angle with regard to the main extent plane (480) of the common main surface (410) and in which the second cable through opening is formed.

6. The housing device (400) as claimed in either of claims 4 and 5, **characterized in that** the first depression section (420) and/or the second depression section (430) are/is arranged along a side edge (490) of the common main surface (410).

7. The housing device (400) as claimed in one of the preceding claims, **characterized by** a first fastening device (440) which is arranged adjacently with respect to the first cable through opening for fastening the first connector cable (A), and/or a second fastening device (450) which is arranged adjacently with respect to the second cable through opening for fastening the second connector cable (B).

8. The housing device (400) as claimed in one of the preceding claims, **characterized in that** the tolerance range corresponds to half the length of the rail brake, the tolerance range corresponding, in particular, to a quarter of the length of the rail brake.

9. An electromagnetic or permanently magnetic rail brake for a rail vehicle, **characterized in that** the rail brake has at least one housing device (400) for a magnet body as claimed in one of the preceding claims.

## Revendications

1. Dispositif (400) formant boîtier d'une pièce magnétique d'un frein sur rail électromagnétique ou à aimant permanent, le dispositif (400) formant boîtier ayant une première traversée de câble pour faire passer un premier câble (A) électrique de connexion dans la pièce magnétique, **caractérisé en ce qu'**un premier axe (470) d'étendue axiale de la première ouverture de passage du câble fait un angle (α) d'inclinaison aigu avec une surface (410) principale, voisine de la première traversée de câble, du dispositif (400) formant boîtier, la première ouverture de passage de câble étant disposée dans une plage de tolérance au milieu du frein sur rail.

2. Dispositif (400) formant boîtier suivant la revendication 1, dans lequel le dispositif (400) formant boîtier a une deuxième ouverture de passage de câble, pour le passage d'un deuxième câble (B) électrique de connexion dans la pièce magnétique, **caractérisé en ce que** le deuxième axe (460) d'étendue axial fait un angle (α) d'inclinaison aigu avec la surface (410) principale, qui est voisine de la première ouverture de passage de câble et/ou de la deuxième ouverture de passage de câble.

3. Dispositif (400) suivant la revendication 2, **caractérisé en ce que** le premier axe (470) d'étendue axial et le deuxième axe (460) d'étendue axial font, entre eux, un angle (β) obtus.

4. Dispositif (400) suivant l'une des revendications précédentes, **caractérisé en ce que** la première ouverture de passage de câble est disposée dans une première partie (420) de cavité du dispositif (400) formant boîtier et/ou la deuxième ouverture de passage de câble est disposée dans une deuxième partie (430) de cavité du dispositif (400) formant boîtier, la première partie (420) de cavité et la deuxième partie (430) de cavité étant formées notamment dans une surface (410) principale commune du dispositif (400) formant boîtier.

5. Dispositif (400) suivant la revendication 1, **caractérisé en ce que** la première partie (420) de cavité a une paroi (422) inclinée suivant un angle aigu par rapport à un plan (480) d'étendue axial de la première surface (410) principale commune, paroi dans laquelle est formée la première ouverture de passage de câble et/ou la deuxième partie (430) a une paroi (432) inclinée suivant un angle aigu par rapport au plan (480) d'étendue principal de la surface (410) principale commune, paroi dans laquelle est formée la deuxième ouverture de passage de câble.

6. Dispositif (400) suivant l'une des revendications 4 à 5, **caractérisé en ce que** la première partie (420) de cavité et/ou la deuxième partie (430) de cavité est disposée le long d'un bord (490) latéral de la surface (410) principale commune.

7. Dispositif (400) suivant l'une des revendications précédentes, **caractérisé par** un premier dispositif (440) de fixation, disposé au voisinage de la première ouverture de passage de câble, pour fixer le premier câble (A) de connexion et/ou un deuxième dispositif (450) de fixation, disposé près de la deuxième ouverture de passage de câble, pour fixer le deuxième câble (B) de connexion.

8. Dispositif (400) suivant l'une des revendications précédentes, **caractérisé en ce que** la plage de tolérance correspond à la moitié de la longueur du frein sur rail, la plage de tolérance correspondant notamment à un quart de la longueur du frein sur rail.

9. Frein sur rail électromagnétique ou à aimant permanent, pour un véhicule ferroviaire, **caractérisé en ce que** le frein sur rail a au moins un dispositif (400) formant boîtier d'une pièce magnétique suivant l'une des revendications précédentes.
